# EUROPEAN PATENT APPLICATION

(11) **EP 2 808 973 A1**
(43) Date of publication of application: **03.12.2014**
(21) Application number: 12866674.0
(22) Date of filing: 31.10.2012
(51) Int. Cl.: H02J 7/00, H01M 10/44, H02J 7/02

(54) **BATTERY CELL VOLTAGE EQUALISATION CIRCUIT**

(30) Priority: 25.01.2012 JP 2012012818
(71) Applicant: Kabushiki Kaisha Toyota Jidoshokki, Kariya-shi, Aichi 448-8671 (JP)
(72) Inventor: YAMAMOTO, Munetaka, Kariya-shi Aichi 448-8671 (JP); SUZUKI, Masaaki, Kariya-shi Aichi 448-8671 (JP); KURAISHI, Mamoru, Kariya-shi Aichi 448-8671 (JP)
(74) Representative: TBK
(86) International application number: PCT/JP2012/078221
(87) International publication number: WO 2013/111410

(57) **Abstract**

A battery cell voltage equalization circuit 1 equalizes the voltages of battery cells B1 and B2 that are connected in series. A switch S1 is electrically connected to the positive electrode of the battery cell B1 via a first path, is electrically connected to the negative electrode of the battery cell B1 via a second path, and electrically connects or disconnects the first and second paths. A switch S2 is electrically connected to the positive electrode of the battery cell B2 via the second path, is electrically connected to the negative electrode of the battery cell B2 via a third path, and electrically connects or disconnects the second and third paths. An inductor L is provided in the second path. Fuses h1 through h3 are provided in the first through third paths, respectively. The switches S1 and S2 are controlled to an ON state alternately.

## Description

### Technical Field

The present invention relates to a circuit that equalizes voltages of a plurality of battery cells that are connected in series.

### Background Art

Techniques that realize a high-voltage battery by connecting a plurality of rechargeable battery cells in series have been practiced. This type of battery has gathered attention as batteries implemented in for example electric cars, or hybrid cars, which use a gasoline engine and an electric motor in combination.

However, when many battery cells are charged in a state such that they are connected in series, the output voltage (or the electricity remaining in the battery cell) may sometimes vary from one battery cell to another. Also, when the above batteries are implemented in an electric car or the like, discharging and charging are repeated for driving the motor and for regenerating electricity, which sometimes leads to variations in voltages between battery cells. Variations in voltages between battery cells may accelerate the deterioration of some of the battery cells and may also cause a decrease in the efficiency of the entire battery. Also, variations in voltages between battery cells can be caused by production variations, degradation due to aging, etc. of battery cells. Accordingly, techniques that equalize voltages of a plurality of battery cells have conventionally been proposed or practiced.

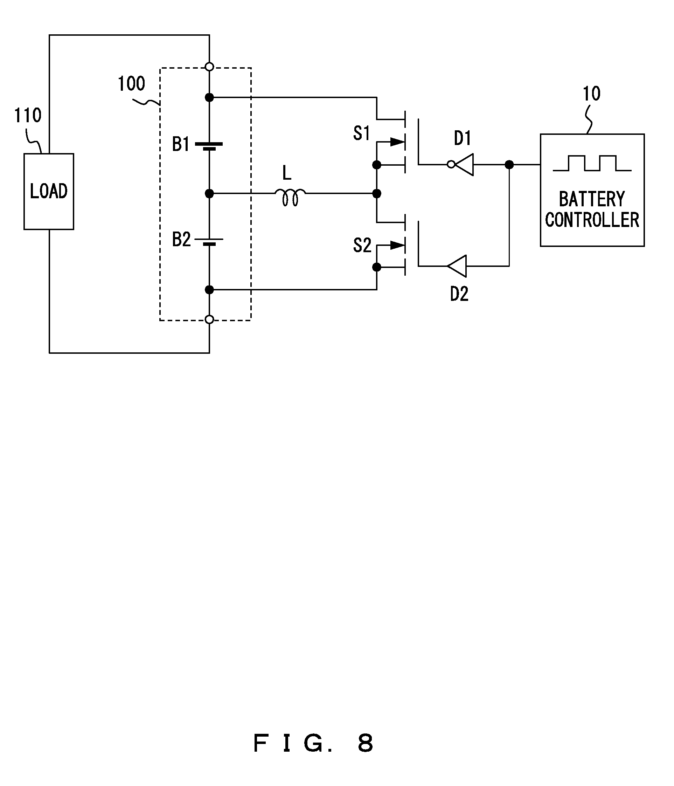

FIG. 8 shows an example of a conventional battery cell voltage equalization circuit. In this example, a battery 100 includes two rechargeable battery cells B1 and B2. The battery cells B1 and B2 are connected to each other in series. A load 110 is connected to the battery 100.

The battery cell voltage equalization circuit includes an inductor L, switches S1 and S2, driver circuits D1 and D2, and a battery controller 10 as shown in FIG. 8. The battery controller 10 monitors the voltages of the battery cells B1 and B2. In the explanations below, it is assumed that the voltage of the battery cell B1 is higher than that of the battery cell B2. The battery controller 10 generates a pulse string signal having a prescribed duty when the battery controller 10 performs a cell balance operation, which equalizes the voltages of the battery cells B1 and B2.

The driver circuit D1 is an inversion driver while the driver circuit D2 is a non-inversion driver. Accordingly, when the battery controller 10 has output a pulse string signal, the switches S1 and s2 are controlled to an ON state alternately. In other words, when the switch S1 is controlled to an ON state, the switch S2 is controlled to an OFF state, whereas when the switch S1 is controlled in an OFF state, the switch S2 is controlled to an ON state.

When the switch S1 is controlled to an ON state and the switch S2 is controlled to an OFF state, an electric current flows from the positive electrode of the battery cell B1 to the negative electrode of the battery cell B1 via the switch S1 and the inductor L. This decreases the voltage of the battery cell B1. Also, this electric current accumulates energy in the inductor L.

Next, when the switch S1 is controlled to an OFF state and the switch s2 is controlled to an ON state, an electric current flows in the direction of charging the battery cell B2 via the switch S2 and the inductor L by the energy accumulated in the inductor L. This increases the voltage of the battery cell B2. Accordingly, by repeating the above switching operation, the voltages of the battery cells B1 and B2 are equalized or equalized substantially.

As related techniques, Patent Documents 1 through 5 are known.

However, in a conventional battery cell voltage equalization circuit, there is a risk that an overcurrent will occur during a cell balance operation. In the configuration shown in FIG. 8 for example, an overcurrent may occur in the following situations.
(1) The switches S1 and S2 are brought to an ON state simultaneously due to a failure in the battery controller 10 or the driver circuits D1 and D2
(2) A short circuit occurs in the switch S1 or S2 due to a failure
(3) The period of time with the switch S1 or S2 in an ON state continues for too a long period of time (duty of the pulse string signal becomes too large)

When the above overcurrent occurs, the temperature of the battery 100 increases, causing a risk of deterioration of the battery 100.
Patent Document 1: Japanese Laid-open Patent Publication No. 2005-143160
Patent Document 2: Japanese Laid-open Patent Publication No. 2000-287370
Patent Document 3: Japanese Laid-open Patent Publication No. 2010-220377
Patent Document 4: Japanese Laid-open Patent Publication No. 2007-336667
Patent Document 5: Japanese Laid-open Patent Publication No. 2010-257775

### Summary of the Invention

It is an object of the present invention to protect a battery cell and a battery cell voltage equalization circuit from an overcurrent in a battery cell voltage equalization circuit that equalizes voltages of a plurality of battery cells connected in series.

A battery cell voltage equalization circuit according to the present invention equalizes the voltages of a first rechargeable battery cell and a second rechargeable battery cell that are connected in series. The battery cell voltage equalization circuit includes a first switch that is electrically connected to the positive electrode of the first battery cell via a first path, is electrically connected to the negative electrode of the first battery cell via a second path, and electrically connects or disconnects the first path and the second path; a second switch that is electrically connected to the positive electrode of the second battery cell via the second path, is electrically connected to the negative electrode of the second battery cell via a third path, and electrically connects or disconnects the second path and the third path; an inductor that is provided in the second path; and a fuse that is provided in at least one of the first through third paths.

According to the above configuration, when overcurrents have occurred in the first through third paths, fuses blow, and accordingly a first battery cell and/or a second battery cell are protected from the overcurrents. When a configuration providing fuses in two or more paths among the first through third paths is employed, both of the first and second battery cells are protected from the overcurrents. Also, in a configuration providing a fuse in only one of the first through third paths, at least one of the first and second battery cells is protected from the overcurrents. In such a case, when for example a path or a pattern that is highly likely to have an overcurrent in it is estimated, the problem that would be caused by the overcurrent can be avoided by providing a fuse in accordance with the estimated path or pattern. As an example, when a fuse is provided in the first or third path, the first and second battery cells are protected from an overcurrent that would be caused by a failure in which the first and second switches enter an ON state simultaneously. Similarly, the first and second switches constituting the battery cell voltage equalization circuit are also protected from the overcurrents.

It is also possible to provide fuses in two of the first through third paths, respectively. When fuses are provided in two of the first through third paths, the first and second battery cells are protected from an overcurrent even when one of the electric current flowing between the positive and negative electrodes of the first battery cell via the first switch and the inductor, the electric current flowing between the positive and negative electrodes of the second battery cell via the second switch and the inductor, and the electric current flowing between the positive electrode of the first battery cell and the negative electrode of the second battery cell via the first and second switches has become an overcurrent because one of the fuses blows. Note that in the configuration providing a fuse in the second path, the fuse is provided for example between the negative electrode of the first battery cell, the positive electrode of the second battery cell, and the inductor.

The battery cell voltage equalization circuit having the above configuration may include a monitoring unit that monitors the voltage between both ends of the first switch, the voltage between both ends of the second switch, and an electric current flowing via the inductor, and a detection unit that detects disconnection of the fuse on the basis of results of the monitoring performed by the monitoring unit. This configuration makes it easy to detect which fuse has blown when a plurality of fuses are included in a battery cell voltage equalization circuit.

According to the present invention, it is possible to protect a battery cell and a battery cell voltage equalization circuit from an overcurrent in the battery cell voltage equalization circuit that equalizes the voltages of a plurality of the battery cells that are connected in series.

### Brief Description of Drawings

FIG. 1 shows a configuration of a battery cell voltage equalization circuit according to an embodiment of the present invention;
FIG. 2 explains an electric current path that is assumed in the battery cell voltage equalization circuit;
FIG. 3 shows an example of a battery cell voltage equalization circuit having a smaller number of fuses;
FIG. 4 shows a configuration of a battery cell voltage equalization circuit that equalizes the voltages of four battery cells;
FIG. 5 shows an example of battery cell voltage equalization circuits having a smaller number of fuses than the number of those used in the configuration shown in FIG. 4 (first);
FIG. 6 shows an example of battery cell voltage equalization circuits having a smaller number of fuses than the number of those used in the configuration shown in FIG. 4 (second);
FIG. 7 explains a configuration and method for detecting a fuse blowout; and
FIG. 8 shows an example of a conventional battery cell voltage equalization circuit.

### Best Mode for Carrying Out the Invention

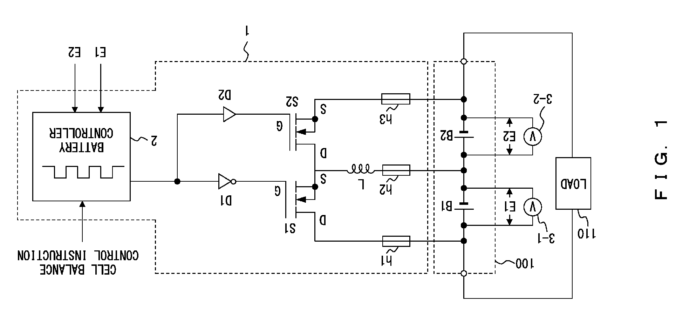

FIG. 1 shows a configuration of a battery cell voltage equalization circuit according to an embodiment of the present invention. A battery cell voltage equalization circuit 1 according to an embodiment equalizes voltages of a plurality of rechargeable battery cells that are connected in series. In the example shown in FIG. 1, the battery cell voltage equalization circuit 1 equalizes the voltages of two battery cells B1 and B2 connected in series. The battery cells B1 and B2 are accommodated in a battery 100.

The battery 100 and the battery cell voltage equalization circuit 1 are implemented in for example electric cars, or a hybrid car, which uses a gasoline engine and an electric motor in combination. In such a case, the battery 100 is recharged by a charger (not shown). Also, the battery 100 is used for supplying electricity at least to a traveling motor. In such a case, a load 110 shown in FIG. 1 is a motor including an inverter etc. Further, the battery 100 is charged with a regenerated current, which is generated by the traveling motor, when the vehicle is decreasing in speed or in other situations.

The battery cell voltage equalization circuit 1 includes a battery controller 2, driver circuits D1 and D2, switches S1 and S2, an inductor L, and fuses h1 through h3. When a cell balance control instruction has been given, the battery cell voltage equalization circuit 1 equalizes or substantially equalizes the voltages of the battery cells B1 and B2.

The battery controller 2 includes for example a micro computer. In such a case, it is also possible to employ a configuration in which the battery controller 2 executes a cell balance process program stored in a memory (not shown). Also, the battery controller 2 may be implemented by using an FPGA, an ASIC, etc.

When a cell balance control instruction is given, the battery controller 2 executes a cell balance operation of equalizing the voltages of the battery cells B1 and B2. A cell balance control instruction is given for example from a higher layer. As an example, when the battery 100 and the battery cell voltage equalization circuit 1 are implemented in a vehicle, the CPU that controls the vehicle issues a cell balance control instruction. Alternatively, it is also possible to issue a cell balance control instruction in response to an input performed by a user. Also, the battery controller 2 generates a control signal for equalizing the voltages of the battery cells B1 and B2 while monitoring the voltage E1 of the battery cell B1 and the voltage E2 of the battery cell B2. This control signal is for example a pulse string signal having a prescribed duty. A duty of a pulse string signal may be fixed but does not have to be fixed. A control signal (i.e., a pulse string signal) output from the battery controller 2 is guided to the driver circuits D1 and D2.

The voltages of the battery cells B1 and B2 are detected by voltage sensors 3-1 and 3-2, respectively. Also, the voltage sensors 3-1 and 3-2 may be provided in an external environment of the battery 100 as shown in FIG. 1, and also may be provided in the battery 100.

The driver circuit D1 is an inversion driver while the driver circuit D2 is a non-inversion driver. Accordingly, when the battery controller 2 outputs a pulse string signal, the switches S1 and s2 are controlled to an ON state alternately. In other words, when the control signal is at an H level, the output of the driver circuit D1 is at an L level and the output of the driver circuit D2 is at an H level. Also, when the control signal is at an L level, the output of the driver circuit D1 is at an H level and the output of the driver circuit D2 is at an L level.

Each of the switches S1 and S2 includes a first terminal, a second terminal, and a control terminal, and electrically connects or disconnects the first and second terminals in accordance with a signal applied to the control terminal. The switches S1 and s2 are for example NMOS transistors as shown in FIG. 1, although they are not particularly limited. Hereinafter, it is assumed that the switches S1 and S2 are NMOS transistors. In such a case, the first terminal, the second terminal, and the control terminal correspond to a drain, a source, and a gate, respectively.

The gate of the switch S1 is electrically connected to the output terminal of the driver circuit d1. The drain of the switch S1 is electrically connected to the positive electrode of the battery cell B1 via the fuse h1. The source of the switch S1 is electrically connected to the drain of the switch S2 and the first terminal of the inductor L. The second terminal of the inductor L is electrically connected to the negative electrode of battery cell B1 and the positive electrode of the battery cell B2 via the fuse h2.

The gate of the switch s2 is electrically connected to the output terminal of the driver circuit D2. The drain of the switch S2 is electrically connected to the source of the switch S1 and the first terminal of the inductor L. The source of the switch S2 is electrically connected to the negative electrode of the battery cell B2 via the fuse h3.

It is now assumed that the path between the positive electrode of the battery cell B1 and the drain of the switch S1 is referred to as a first path, the path between the negative electrode of the battery cell B1, the positive electrode of the battery cell B2, the source of the switch S1 and the drain of the switch s2 is referred to as a second path, and the path between the negative electrode of the battery cell B2 and the source of the switch S2 is referred to as a third path. In this situation, the switch S1 is electrically connected to the positive electrode of the battery cell B1 through the first path, is also electrically connected to the negative electrode of the battery cell B1 through the second path, and electrically connects or disconnects the first and second paths. Similarly, the switch S2 is electrically connected to the positive electrode of the battery cell B2 through the second path, is electrically connected to the negative electrode of the battery cell B2 through the third path, and electrically connects or disconnects the second and third paths.

Next, operations of the battery cell voltage equalization circuit 1 shown in FIG. 1 will be explained. Hereinafter, operations performed after the battery controller 2 receives a cell balance control instruction will be explained. Also, it is assumed that the voltage E1 of the battery cell B1 is higher than the voltage E2 of the battery cell B2 when the battery controller 2 receives a cell balance control instruction.

The battery controller 2 outputs a pulse string signal as a control signal that controls the balance of voltages of the battery cells B1 and B2. When the control signal is at an L level, the switch S1 is controlled to an ON state and the switch S2 is controlled to an OFF state. In this situation, an electric current flows from the positive electrode of the battery cell B1 to the negative electrode of the battery cell B1 via the switch S1 and the inductor L. In other words, the battery cell B1 is discharged. This decreases the voltage of the battery cell B1. Also, this electric current accumulates energy in the inductor L.

Next, when the control signal changes to an H level, the switch S1 is controlled to an OFF state and the switch S2 is controlled to an ON state. In this situation, due to the energy accumulated in the inductor L, an electric current flows in the direction of charging the battery cell B2 via the switch S2 and the inductor L. This increases the voltage of the battery cell B2. Accordingly, by repeating the above switching operations, the voltages of the battery cells B1 and B2 become closer to each other. The battery controller 2 terminates the cell balance operation when the difference in voltage between the battery cells B1 and B2 has become smaller than a prescribed threshold. As a result of this, the voltages of the battery cells B1 and B2 are equalized or substantially equalized.

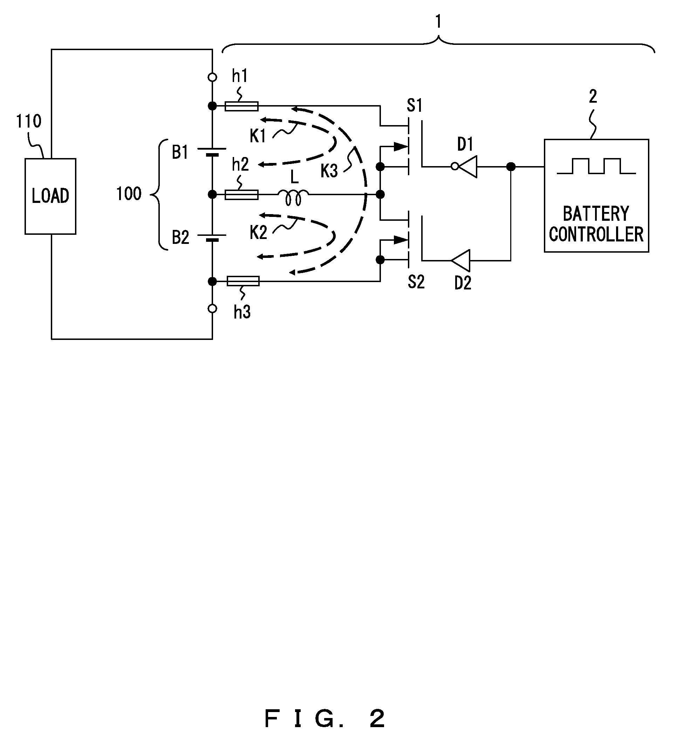

FIG. 2 shows an electric current path that is assumed in the battery cell voltage equalization circuit 1 shown in FIG. 1. In the battery cell voltage equalization circuit 1, the three electric current paths K1 through K3 shown in FIG. 2 are assumed in accordance with statues of the circuit.

The electric current path K1 starts from the positive electrode of the battery cell B1 and reaches the negative electrode of the battery cell B1 via the fuse h1, the switch S1 the inductor L, and the fuse h2. This electric current path K1 is formed when the switch S1 has been controlled to an ON state and the switch S2 has been controlled to an OFF state. Note that when the battery cell B1 is discharged, an electric current flows in a clockwise direction through the electric current path K1 in FIG. 2 while when the battery cell B1 is charged, an electric current flows in a counterclockwise direction through the electric current path K1 in FIG. 2.

The electric current path K2 starts from the positive electrode of the battery cell B2 and reaches the negative electrode of the battery cell B2 via the fuse h2, the inductor L, the switch S2, and the fuse h3. This electric current path K2 is formed when the switch S1 has been controlled to an OFF state and the switch S2 has been controlled to an ON state. Note that when the battery cell B2 is discharged, an electric current flows in a clockwise direction through the electric current path K2 in FIG. 2 while when the battery cell B2 is charged, an electric current flows in a counterclockwise direction through the electric current path K2 in FIG. 2.

The electric current path K3 starts from the positive electrode of the battery cell B1 and reaches the negative electrode of the battery cell B2 via the fuse h1, the switch S1 the switch S2, and the fuse h3. This electric current path K3 is formed when both of the switches S1 and S2 are in an ON state (or in a shortcircuit state). In other words, the electric current path K3 is formed mainly when a failure has occurred in the battery cell voltage equalization circuit 1.

When an overcurrent has occurred in the battery cell voltage equalization circuit 1, a fuse provided in the path through which that overcurrent flows will blow. As a result of this, the overcurrent stops so that the battery 100 or the battery cells B1 and B2 are protected. Similarly, the switches S1 and S2 constituting the battery cell voltage equalization circuit 1 are also protected from the overcurrent.

When an overcurrent has occurred in the electric current path K1, the fuse h1 or h2 will blow. Thereby, the battery cell B1 and the switch S1 are protected from the overcurrent. Also, when an overcurrent has occurred in the electric current path K2, the fuse h2 or h3 will blow. Thereby, the battery cell B2 and the switch S2 are protected from the overcurrent. Further, when an overcurrent has occurred in the electric current path K3, the fuse h1 or h3 will blow. Thereby, the battery cells B1 and B2 and the switches S1 and S2 are protected from the overcurrent.

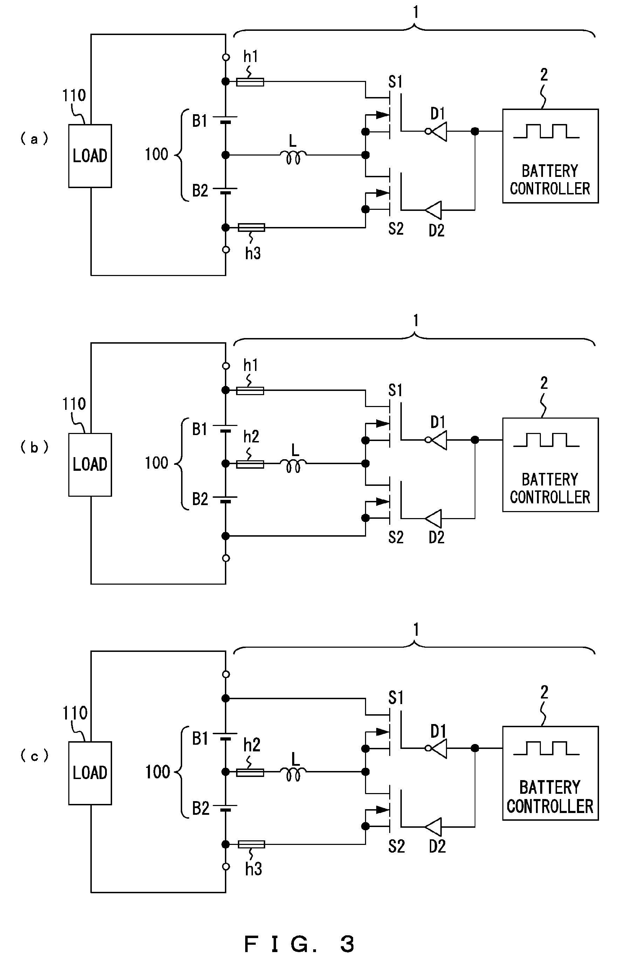

As described above, in the configuration shown in FIG. 1 and FIG. 2, fuses are provided to the respective wires that are electrically connected to the battery 100. In this configuration, when the battery 100 has n battery cells connected in series, the battery cell voltage equalization circuit 1 needs n+1 fuses. However, when the battery 100 has n battery cells connected in series in the battery cell voltage equalization circuit 1, it is also possible to make the number of fuses smaller than n+1. FIG. 3 shows an example of a battery cell voltage equalization circuit having a smaller number of fuses than the number of those used in the configuration shown in FIG. 1 and FIG. 2.

In the example shown in FIG. 3 (a), the fuse h2 is not provided, unlike the configuration shown in FIG. 1 and FIG. 2. In this configuration, when an overcurrent has occurred in the electric current path K1, the fuse h1 blows. When an overcurrent has occurred in the electric current path K2, the fuse h3 blows. When an overcurrent has occurred in the electric current path K3, the fuse h1 or h3 blows. In other words, when an overcurrent has occurred in any of the electric current paths K1 through K3, one of the fuses h1 through h3 blows, leading to the protection of the battery cells B1 and B2 and the switches S1 and S2 from an overcurrent.

In the example shown in FIG. 3 (b), the fuse h3 is not provided, unlike the configuration shown in FIG. 1 and FIG. 2. In this configuration, when an overcurrent has occurred in the electric current path K1, the fuse h1 or h2 blows. When an overcurrent has occurred in the electric current path K2, the fuse h2 blows. When an overcurrent has occurred in the electric current path K3, the fuse h1 blows.

In the example shown in FIG. 3(c), the fuse h1 is not provided, unlike the configuration shown in FIG. 1 and FIG. 2. In this configuration, when an overcurrent has occurred in the electric current path K1, the fuse h2 blows. When an overcurrent has occurred in the electric current path K2, the fuse h2 or h3 blows. When an overcurrent has occurred in the electric current path K3, the fuse h3 blows.

As described above, in the configuration shown in FIG. 3, when the battery 100 has n battery cells connected in series, the battery cell voltage equalization circuit 1 needs n fuses. In other words, according to the configuration shown in FIG. 3, it is possible to protect the battery cells B1 and B2 and the switches S1 and S2 from an overcurrent with a smaller number of fuses than the number of those in the configuration shown in FIG. 1 and FIG. 2.

While a case has been explained where the voltages of two battery cells are equalized in order to simplify the description in the above example, the battery cell voltage equalization circuit 1 according to an embodiment can equalize voltages of three or more battery cells. Hereinafter, explanations will be given for a battery cell voltage equalization circuit that equalizes voltages of three or more battery cells.

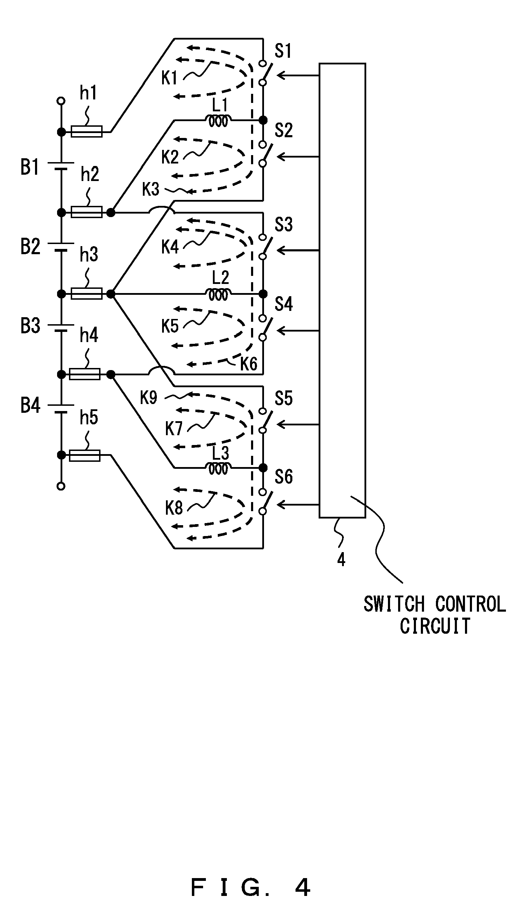

FIG. 4 shows a configuration of a battery cell voltage equalization circuit that equalizes the voltages of four battery cells. In this example, the battery cell voltage equalization circuit includes switches S1 through S6, inductors L1 through L3, fuses h1 through h5, and a switch control circuit 4. The battery cells B1 through B4 are connected in series.

The switches S1 and S2 and the inductor L1 are provided to the battery cells B1 and B2. In this example, the switches S1 and S2 and the inductor L1 have a circuit configuration equivalent to that of the switches S1 and S2 and the inductor L shown in FIG. 1. Specifically, the first terminal of the switch S1 is electrically connected to the positive electrode of the battery cell B1. The second terminal of the switch S1 is electrically connected to the first terminal of the switch S2 and is electrically connected to the negative electrode of the battery cell B1 via the inductor L1. In this example, the negative electrode of the battery cell B1 is electrically connected to the positive electrode of the battery cell B2. Further, the second terminal of the switch S2 is electrically connected to the negative electrode of the battery cell B2.

Similarly, the switches S3 and S4 and the inductor L2 are provided to the battery cells B2 and B3. The first terminal of the switch S3 is electrically connected to the positive electrode of the battery cell B2. The second terminal of the switch S3 is electrically connected to the first terminal of the switch S4 and is electrically connected to the negative electrode of the battery cell B2 via the inductor L2. In this example, the negative electrode of the battery cell B2 is electrically connected to the positive electrode of the battery cell B3. Further, the second terminal of the switch S4 is electrically connected to the negative electrode of the battery cell B3.

Similarly, the switches S5 and S6 and the inductor L3 are provided to the battery cells B3 and B4. The first terminal of the switch S5 is electrically connected to the positive electrode of the battery cell B3. The second terminal of the switch S5 is electrically connected to the first terminal of the switch S6 and is electrically connected to the negative electrode of the battery cell B3 via the inductor L3. In this example, the negative electrode of the battery cell B3 is electrically connected to the positive electrode of the battery cell B4. Further, the second terminal of the switch S6 is electrically connected to the negative electrode of the battery cell B4.

Further, the battery cell voltage equalization circuit shown in FIG. 4 includes fuses h1 through h5 on respective wires that are electrically connected to the battery cells B1 through B4.

The switch control circuit 4 controls the switches S1 through S6 so as to equalize the voltages of the battery cells B1 through B4. For this controlling, the switch control circuit 4 gives control signals that correspond to the respective control terminals of the switches S1 through S6. Specifically, when the switch control circuit 4 equalizes the voltages of the battery cells B1 and B2, it alternately controls the switches S1 and S2 to an ON state, when the switch control circuit 4 equalizes the voltages of the battery cells B2 and B3, it alternately controls the switches S3 and S4 to an ON state, and when the switch control circuit 4 equalizes the voltages of the battery cells B3 and B4, it alternately controls the switches S5 and S6 to an ON state. The equalization of the voltages of the battery cells B1 and B2, the equalization of the voltages of the battery cells B2 and B3, and the equalization of the voltages of the battery cells B3 and B4 are performed in for example a time-split method. Also, the switch control circuit 4 executes the above switching operation until the difference between the battery cells B1 through B4 (for example, the difference between the maximum value and the minimum value) becomes smaller than a prescribed threshold.

In the voltage equalization circuit of the above configuration, the electric current paths K1 through K9 shown in FIG. 4 are assumed. The electric current paths K1 through K3 are substantially the same as the electric current paths K1 through K3 shown in FIG. 2. The electric current paths K4 through K6 and the electric current paths K7 through K9 have roughly the same path patterns as those of the electric current paths K1 through K3. However, the electric current paths K4 through K6 are formed in the equalization of the voltages of the battery cells B2 and B3 while the electric current paths K7 through K9 are formed in the equalization of the voltages of the battery cells B3 and B4.

When an overcurrent has occurred in the electric current path K1, the fuse h1 or h2 blows. When an overcurrent has occurred in the electric current path K2, the fuse h2 or h3 blows. When an overcurrent has occurred in the electric current path K3, the fuse h1 or h3 blows. When an overcurrent has occurred in the electric current path K4, the fuse h2 or h3 blows. When an overcurrent has occurred in the electric current path K5, the fuse h3 or h4 blows. When an overcurrent has occurred in the electric current path K6, the fuse h2 or h4 blows. When an overcurrent has occurred in the electric current path K7, the fuse h3 or h4 blows. When an overcurrent has occurred in the electric current path K8, the fuse h4 or h5 blows. When an overcurrent has occurred in the electric current path K9, the fuse h3 or h5 blows. As described above, when an overcurrent has occurred in one of the electric paths, the battery cells B1 through B4 and the switches S1 through S6 are protected from that overcurrent.

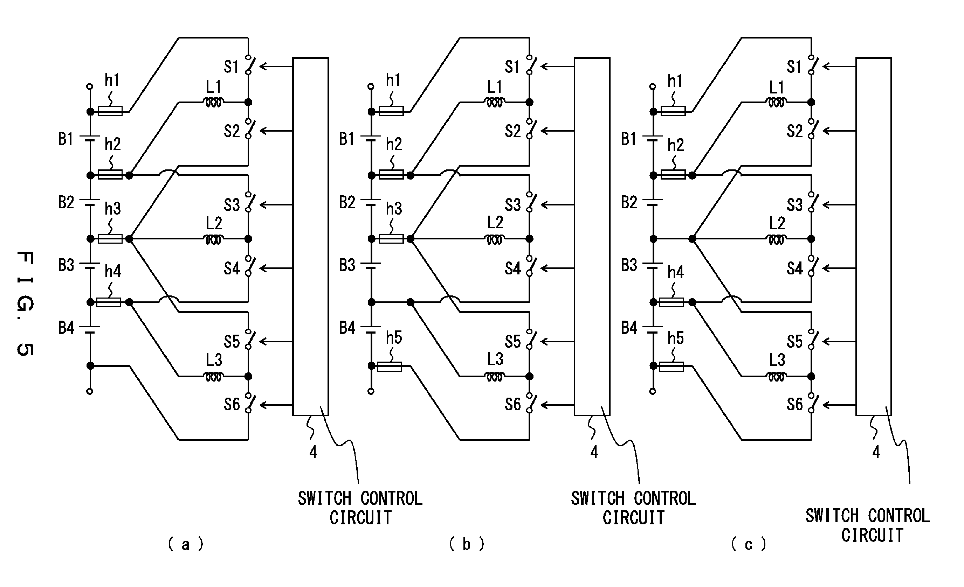

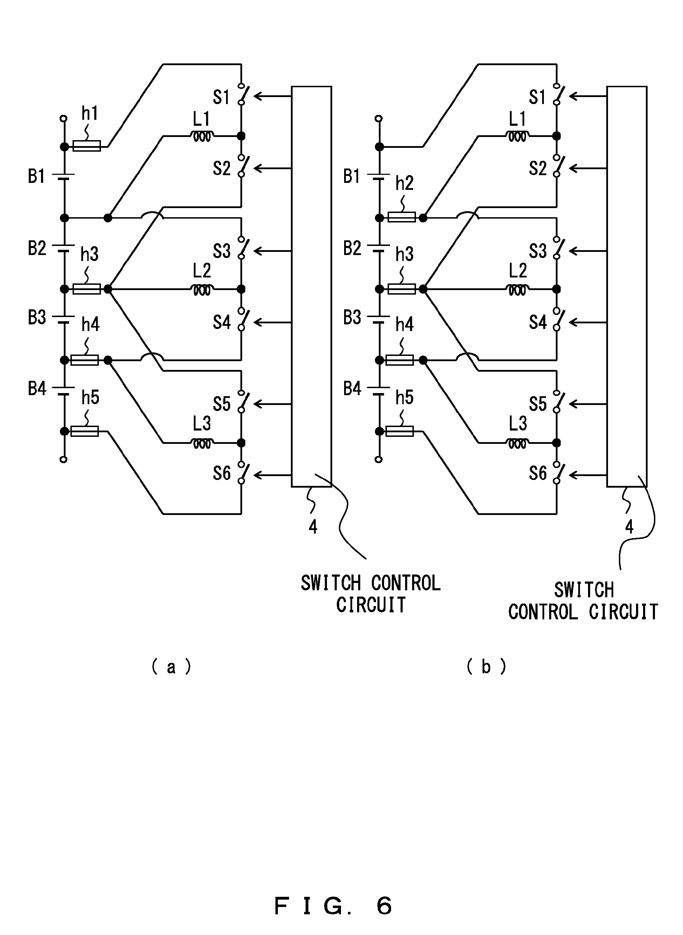

FIG. 5 and FIG. 6 show examples of battery cell voltage equalization circuits having a smaller number of fuses than the number of those used in the configuration shown in FIG. 4. In the configuration shown in FIG. 5 (a), the fuse h5 is not provided, unlike the configuration shown in FIG. 4. Similarly, in the configurations shown in FIG. 5 (b), FIG. 5 (c), FIG. 6 (a) and FIG. 6(b), the respective fuses h4, h3, h2 and h1 are not provided, unlike the configuration shown in FIG. 4. Also in the configurations shown in FIG. 5 through FIG. 6, when an overcurrent has occurred in the electric current paths K1 through K9 shown in FIG. 4, one of the fuses blows so as to protect the battery cells B1 through B4 and the switches S1 through S6 from the overcurrent.

It is also possible to further reduce the number of fuses in the above battery cell voltage equalization circuits. However, when a fuse is not provided to a wire, it is necessary to provide fuses to the first and second wire counting from that wire in order to protect all the battery cells B1 through B4 and the switches S1 through S6 from an overcurrent. When, for example, the fuse h1 is not provided in FIG. 4, it is not possible to omit the fuse 2 or 3. Also, when the fuse h2 is not provided, it is not possible to omit fuse h1, h3 or h4. Accordingly, when the number of fuses is to be reduced to three in FIG. 4, the following three configurations can protect all of the battery cells B1 through B4 and the switches S1 through S6 from an overcurrent.
(1) The fuses h2, h3 and h5 are provided and the fuses h1 and h4 are omitted
(2) The fuses h2, h3 and h4 are provided and the fuses h1 and h5 are omitted
(3) The fuses h1, h3 and h4 are provided and the fuses h2 and h5 are omitted

Next, explanations will be given for the detection of blowouts of fuses. In the following descriptions, a case will be explained in which the battery cell voltage equalization circuit 1 shown in FIG. 1 has a fuse-blowout detection function.

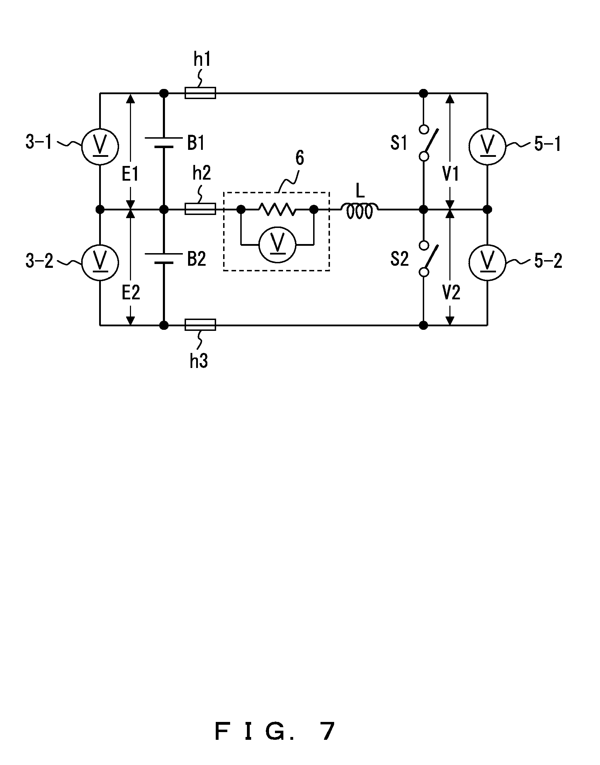

FIG. 7 explains a configuration and a method for detecting a fuse blowout in the battery cell voltage equalization circuit 1. The battery cell voltage equalization circuit 1 includes voltage sensors 5-1 and 5-2 and a current sensor 6 for detecting a fuse blowout in addition to the constituents shown in FIG. 1. The voltage sensor 5-1 detects the voltage between both ends of the switch S1. The voltage sensor 5-2 detects the voltage between both ends of the switch S2. The current sensor 6 includes a shunt resistor provided in the inductor L in series so as to detect an electric current flowing through the inductor L.

The determination of a fuse blowout is performed by the battery controller 2 shown in FIG. 1. In such a case, the battery controller 2 monitors the voltage E1 of the battery cell B1 detected by the voltage sensor 3-1, the voltage E2 of the battery cell B2 detected by the voltage sensor 3-2, the voltage V1 between both ends of the switch S1 detected by the voltage sensor 5-1, the voltage V2 between both ends of the switch S2 detected by the voltage sensor 5-2, and an inductor current detected by the current sensor 6.

### (1) State determination of the fuse h1

When the fuse h1 has not blown, the voltage V1 with the switch S1 in an ON state is close to zero and the voltage V1 with the switch S1 in an OFF state is close to E1. By contrast, when the fuse h1 has blown, the voltage V1 with the switch S1 in an ON state is close to zero and the voltage V1 with the switch S1 in an OFF state is still close to zero. Accordingly, the battery controller 2 can determine the state of the fuse h1 by monitoring outputs of the voltage sensor 5-1.

### (2) State determination of the fuse h2

When E1 is not equal to E2 and the fuse h2 has not blown, an electric current flows via the inductor L when the switch S1 or S2 is controlled to an ON state. By contrast, when the fuse h2 has blown, even when E1 is not equal to E2, an electric current does not flow via the inductor L regardless of the states of the switches S1 and S2. Accordingly, when the fact that E1 is not equal to E2 is detected on the basis of outputs from the voltage sensors 3-1 and 3-2, the battery controller 2 can determine the state of the fuses h2 by monitoring an output from the current sensor 6.

When E1 is nearly equal to E2, the battery controller 2 controls both of the switches S1 and S2 to an OFF state. In such a case, when the fuse h2 has not blown, V2 is nearly equal to E2. By contrast, when the fuse h2 has blown, the fact that V2 is not equal to E2 is detected. Accordingly, the battery controller 2 can determine the state of the fuse h2 by monitoring outputs from the voltage sensors 3-2 and 5-2.

### (3) State determination of the fuse h3

The state determination of the fuse h3 is roughly the same as the method of determining the state of the fuse h1. However, the battery controller 2 monitors an output from the voltage sensor 5-2 so as to determine the state of the fuse h3.

## Claims

1. A battery cell voltage equalization circuit that equalizes voltages of a first rechargeable battery cell and a second rechargeable battery cell that are connected in series, comprising:
a first switch that is electrically connected to a positive electrode of the first battery cell via a first path, that is electrically connected to a negative electrode of the first battery cell via a second path and that electrically connects or disconnects the first path and the second path;
a second switch that is electrically connected to a positive electrode of the second battery cell via the second path, that is electrically connected to a negative electrode of the second battery cell via a third path and that electrically connects or disconnects the second path and the third path;
an inductor that is provided in the second path; and
a fuse that is provided in at least one of the first through third paths.

2. The battery cell voltage equalization circuit according to claim 1, wherein
the fuses are provided in two of the first through third paths, respectively.

3. The battery cell voltage equalization circuit according to claim 1 or 2, wherein
the fuse is provided between the negative electrode of the first battery cell, the positive electrode of the second battery cell, and the inductor in a configuration in which the fuse is provided in the second path.

4. The battery cell voltage equalization circuit according to one of claims 1 through 3, further comprising:
a monitor unit that monitors a voltage between both ends of the first switch, a voltage between both ends of the second switch and an electric current flowing via the inductor; and
a detection unit that detects a blowout of the fuse on the basis of a result of monitoring performed by the monitor unit.
